# EUROPEAN PATENT SPECIFICATION

(11) **EP 0 549 973 B1**
(45) Date of publication and mention of the grant of the patent: **14.08.1996**
(21) Application number: 92121546.3
(22) Date of filing: 18.12.1992
(51) Int. Cl.: B65G 23/06

(54) **Modular conveyor belt sprocket drive system**
Modulares Kettenradantriebssystem
Système modulair d'entraînement de roues à chaînes

(30) Priority: 31.12.1991 US 815030
(43) Date of publication of application: 07.07.1993
(73) Proprietor: The Laitram Corporation, Harahan Louisiana 70123 (US)
(72) Inventor: Ledet, Brent A., Metairie, Louisiana 70002 (US)
(74) Representative: Petri, Stellan

(56) References cited:
- EP-A- 0 054 752
- DD-A- 36 630
- DE-U- 1 896 801
- US-A- 3 724 285
- PATENT ABSTRACTS OF JAPAN vol. 12, no. 437 (M-765)(3284) 17 November 1988 & JP A 63 172 059

## Description

### TECHNICAL FIELD:

This invention relates to a modular link conveyor belt sprocket drive system according to the preamble of claim 1. A conveyor drive of this generic type is disclosed in US-A-3 724 285.

### BACKGROUND:

Plastic modular link conveyor belts are ideally suited for processing foods, chemicals and other critical products that must be protected from environmental contamination, such as bacteria, oil or accumulated dust, dirt and grime. In such environments the belt and belt drive systems need to be sanitized or cleaned frequently, and this is difficult and possibly dangerous when the drive system is located inaccessibly. Also, conventional drive systems using sprocket teeth often employ rough surfaces, crevices and corners tending to accumulate contaminants. In such environmental operating conditions, it has been difficult with prior art systems to meet the critical requirements for cleanliness and sanitation because of the presence of sprocket drive teeth and accompanying drive mechanisms in modular link belt drive systems. Consider that because of the mechanical requirements to bear loads and to rotate for long times sprocket gear teeth and accompanying drive mechanisms require lubrication, which encourages vapors and grime inconsistent with sanitation and lack of contamination. Thus, it is a significant problem when contaminants are present, even in trace quantities and where sprockets and drive systems take configurations that tend to breed pockets of contaminants and which are very difficult to reach and clean.

Furthermore sprocket drive systems often employ mechanisms which are subject to excessive wear in the environment of modular link belt operations, where abrasive residue from the belt can significantly shorten operating life.

Additionally safety to operating and service personnel is a problem. However, conventional prior art sprocket drive mechanisms for conveyor belts have drive gears, pulleys and like mechanisms which may not be adequately protected from the possibility of encounter with clothing, tools, loads or even personal body parts such as hands which can be damaged or eyes into which damaging materials could be thrown.

Furthermore, the location of belt drive sprockets in belt drive systems may not be optimal because of the power drive trains that heretofore have not been compact to fit in various limited space positions. Also it is desirable for optimal system performance to distribute drive power to various belt locations, particularly with longer belts, and the inconvenience of coordinating power drive systems for this purpose has led to compromise in system performance and operating life. Nor have the power drive systems been accessible for maintenance and replacement of defective or worn sprocket wheels and the like, thereby introducing complexity and labor cost for disassembly of portions of the conveyor system to service the power drive portion.

It is therefore an objective of this invention to provide improved sprocket drive systems in modular conveyor belt systems.

Another object of the invention is to provide sprocket drive systems with longer operating life.

Still another object is to provide sprocket drive systems with improved safety to operating and service personnel.

Another objective of the invention is to provide compact modular drive units that are substantially universally positionable along a conveyor belt system, and adaptable to different belt design and drive sprocket configurations.

Other objects, features and objectives of the invention will be found throughout the following description, drawings and claims.

### DISCLOSURE OF THE INVENTION:

The above described objectives are achieved in the modular drive system mentioned in the introduction by means of the features defined in the characterising portion of claim 1.

Substantially all the operating hazards dangerous to personnel are eliminated from the belt drive mechanisms as well as the propensity to accumulate or spread contaminants such as bacteria grease or grime. Thus by closing and sealing in the sprocket drive system mechanism, a conveyor belt system is made more acceptable for environmental control in processing food or chemical products.

Also, operating conditions are improved by compactness of the drive mechanisms into a modular element in accordance with this invention. This reduces friction and packing space, and expedites servicing with simple modular replacement of drive mechanisms with compact modules.

The drive modules are made substantially universal in character by accommodation of various belt sprocket configurations with easily accessible and replaceable sprocket discs. The discs are light weight, thereby reducing power and inertia for better operating conditions, yet sturdy and strong in their assigned duty of driving loaded belts. The discs are further capable of accommodating dynamic stresses of loaded belts under various environmental conditions including curved paths, radical temperature changes and unbalanced loading, by means of free lateral movement transverse to the belt if desired.

All these advantages are achieved by mounting sprocket teeth upon a hollow rotating member internally housing the driving mechanism, typically a substantially cylindrical hermetically sealed drum, which is driven by an internally disposed electric motor and drive gear train. The drum when hermetically sealed prevents leakage of oil, vapor or worn off residue into the atmosphere. Likewise it eliminates dirt, dust and abrasives from the drive mechanism thus providing longer life expectations.

Furthermore, this invention by means of electric drive means coaxially coupled to the shaft provides a modular self contained sprocket wheel power drive unit that can be removably disposed across the width of a modular link conveyor belt at various places in a conveyor belt system. This self contained unit is positionable as a module at one or more predetermined locations within the conveyor belt system for ready removal. This feature permits modular system design with location of modular drive units throughout a system, as is particularly advantageous for longer belts and plastic belts where a single laminar metal drive sprocket system may unduly stress modular plastic belt links. Also the modules are significantly advantageous for maintenance and repair, permitting simplified removal for substitution of other modules with very little down time, and/or permitting facilitated repair or maintenance procedures after removal from restricted locations in the belt drive system.

The sprocket teeth are preferably formed on light weight hollow disc like rings mated on the outer rotating drum peripheral surface of the driving module and keyed for rotation with the drum. Shaped drum surfaces, preferably octagonally sculptured, advantageously drive and key the rings for location along the drum axis to mesh with belt drive apertures individually or in sets. Discs are readily provided and positioned to conform to the sprocket drive spacings and teeth configurations for a variety of different belts. The sprocket rings are mountable with at least a degree of free axial movement to accommodate dynamic belt conditions encountered from unbalanced loading, movement around curves and significant temperature changes, thereby increasing belt life and reliability.

In one embodiment, a multiplicity of floating sprocket wheels that conform with changes in belt dimensions across the belt width are rigidly registered with the center of the belt by means of an easily replaceable sprocket wheel retained in a groove at the center of a drive shaft upon which the sprocket wheels are mounted.

Other features and advantages will be evident from the following text.

### BRIEF DESCRIPTION OF THE DRAWINGS:

In the accompanying drawings, wherein like features are given similar reference characters in the several views to facilitate comparison:
Figure 1 is a fragmental side view sketch of a modular link conveyor belt sprocket drive system wherein the belt is conveyed by sprocket teeth in the direction of the arrow,
Figure 2 is a side perspective view of a modular belt sprocket drive mechanism embodiment of the invention, with comparative fragmental cutaway segment emphasizing construction details of the hollow outer drum used in accordance with this invention to carry the sprocket teeth,
Figure 3 is a perspective, cut away sketch of a typical motor drive embodiment afforded by this invention,
Figures 4, 5 and 6 are sketches, partly in section, and partly broken away, looking axially into the drive shaft for different sprocket wheel to shaft coupling configurations which permit the sprocket wheels to move axially along the shaft in a belt driving relationship,
Figure 7 is a sketch of a drive shaft embodiment with a circumferential groove for retaining a sprocket wheel in a fixed axial position along the shaft, and
Figures 8 and 9 are respective perspective and end views of an assembly of sprocket drive wheels that axially adjust to lateral belt dimensional changes while restraining the belt from drifting in axial position.

### THE PREFERRED EMBODIMENTS:

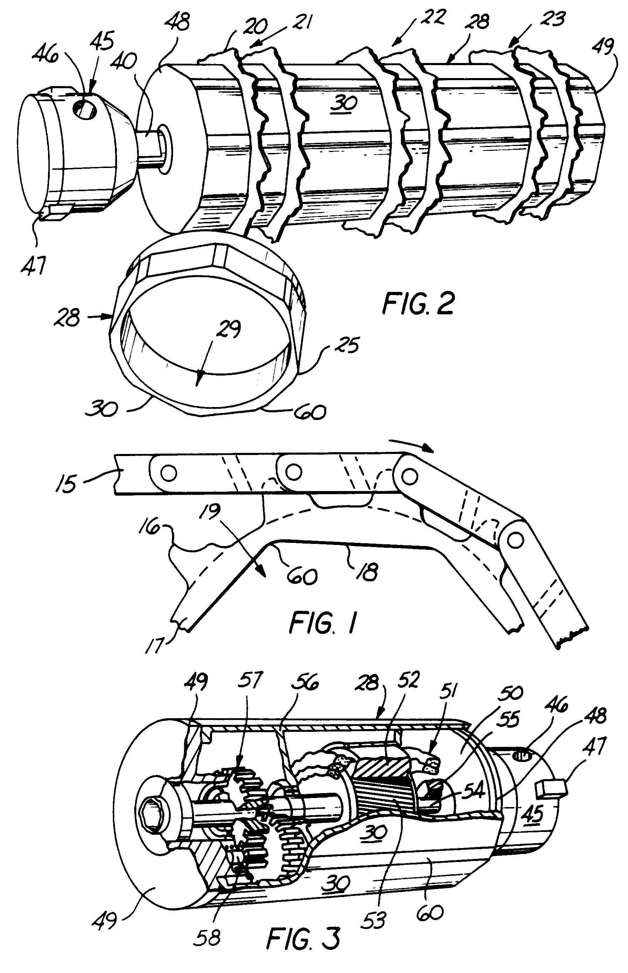

With respect to Figure 1, it is seen that modular link conveyor belt 15 is driven toward the right by means of sprocket teeth 16 in the rotatable sprocket wheel 17, which may be in the form of a drum, disc or series of spaced discs. This sprocket wheel 17 is keyed on a drive shaft by a non-circular and preferably symmetrical central bore 19, in this embodiment defined as an octagon with flat planar sides 18.

As seen in Figure 2, a series of sprocket discs 20 are arranged in paired sets 21, 22, 23 axially along the outer peripheral surface 25 of a hollow body member 28 in the form of a substantially cylindrical pipe 29 with a smooth cylindrical interior surface in this embodiment. The outer peripheral surface has eight flattened surfaces 30 arranged in octagon configuration for mating with octagon shaped aperture surfaces 18 of the individual sprocket discs 20.

The discs 20 and disc sets 21, etc. may have sprocket tooth shapes and spacings to mate with various modular belt configurations of various widths. The outer hollow body member 28 as shown in both Figures 2 and 3 is rotatable coaxially about a supporting shaft 40, which is anchored to a suitable frame, thus making the externally disposed stationary service compartment 45 accessible for receiving lubricating fluid at port 46 and electrical connections at terminals 47. The hollow member 28 has end plates 48, 49 to form an enclosed drum assembly capable of hermetic sealing to prevent dust and grime or conveyor belt residue from entering into the interior, and for preventing internal grease, grit or vapors from entering the environment in which the conveyor belt is working.

In the drum interior 50, as shown in Figure 3, is mounted the conveyor belt electrical drive motor 51, coaxially coupled with driveshaft 30. Conventional stator member 52 is mounted on the stationary inner wall 56 and the conventional armature 53 mounted on the rotatable shaft 54 along the axis of the drive shaft 30, and is journalled for rotation in bearing 55. Thus, the motor drives the planetary gear train 57 having individual gears journalled in bearings 58, etc. thereby to rotate the drum end panel 49 and thus the outer hollow drum cylindrical member 28. Variations from this particular electrical motor driven mechanism can be made without departing from this invention. Alternative forms of such mechanisms are known in the art, such as shown in Chung patent 4,082,180, April 4, 1978 and Besel, et al. patent 3,064,797, Nov. 20, 1962. Also, more than eight sides, say 20 are possible, especially for large diameter sprockets.

Although fewer drum sides 30 could be used, the octagonal configuration including the rounded corners 60 has significant advantage in that the peak to valley ratio of wall thickness is reduced and a thinner, lighter shell is rotatable with less energy. The even number of surfaces is thus symmetrically disposed for good balance. However, if it is desirable to radially key the sprocket discs 20 in a particular position, one such surface (18, 30) may be made asymmetrical by being shorter, longer, or shallower, etc. The thin walls also provide a better dissipation of internal heat from the drive mechanism, which can also be aided by internal lubricant-cooling fluids supplied and monitored at the port 46.

It is evident that the mechanism is easily cleaned and sanitized in the absence of any rough surfaces, crevices and corners that tend to accumulate dirt, grease or grime. The sprocket discs, particularly when freely axially movable can also be easily moved or removed from the drum for cleansing and sanitation. A preferable drum surface material would be anodized aluminum, since it is light weight and non-corrosive, or stainless.

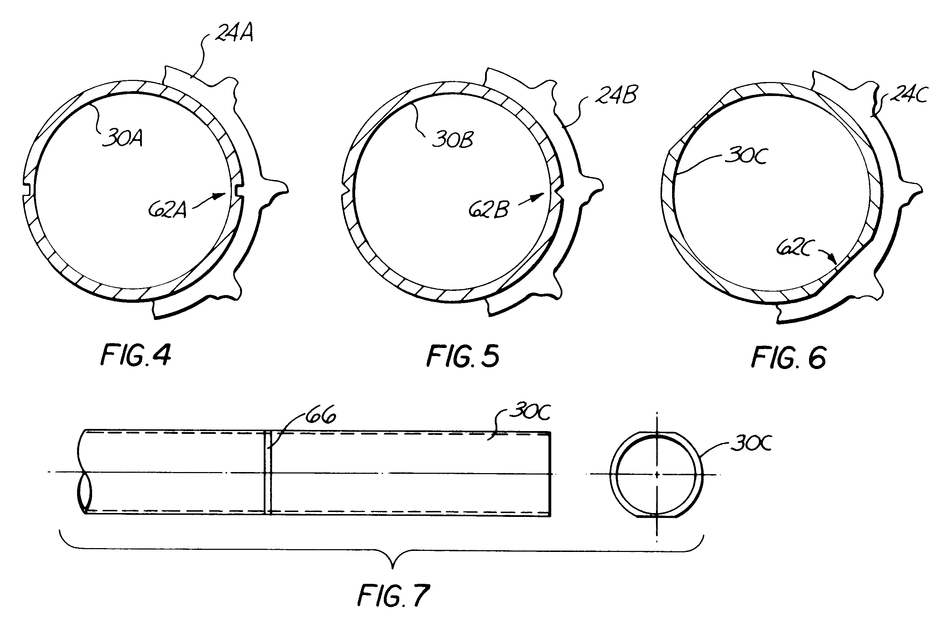

As seen in the respective shaft to sprocket wheel embodiments of Figures 4, 5 and 6, the drive key 62 configuration for non-rotatively retaining the sprocket wheel 24 on the shaft 30 while permitting axial movement may have different patterns. The sprocket wheel 24 is a laminar ring member in contact with the outer surface of hollow drive shaft 30. Mating keying structure respectively provided on the rotatable shaft 30 and sprocket wheels 24 assures rotation of sprocket wheels in a driving relationship with a modular link belt conveyor system. The keying structure constitutes axial displacement means for permitting at least a subcombination of the sprocket wheels aligned on the shaft to axially move along the shaft in response to dynamic conditions encountered in driving the belt.

The special shaft configuration 30C as shown in Figure 7 has an additional feature in that a circumferential groove 66 is provided along the shaft. This, as later explained, is for anchoring the belt drive axis at a predetermined axial location on the shaft 30, to assure proper tracking of the belt so that the belt cannot wander axially off track, even though sprocket wheels 24 are permitted to move axially on the shaft.

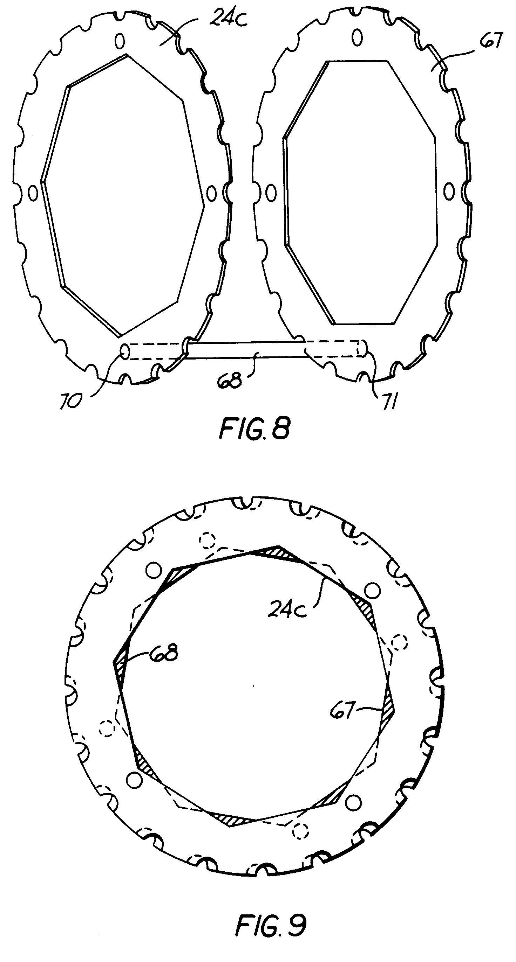

By reference to Figures 7 and 8, it is seen that if the sprocket wheel 67 is slipped in registration over a keyed shaft, in Figure 8 of hexagonal configuration, when it reaches the indentation groove 66, it may be rotated without registering the respective key structure on the wheel and shaft, in effect disregistering the shaft and sprocket wheel keys. Thus the sprocket wheel is retained axially in place, when not rotated back into a position to put the shaft and sprocket wheel keys in registry.

In Figures 8 and 9 consider that sprocket wheel 24C is on the shaft with keys in registry and sprocket wheel 67 is rotated in the indentation so that the keys are misaligned and the wheel 67 is axially retained. The indentation may be wide enough to permit a desired degree of axial movement, if desired, but serves the purpose of confining axial mobility of sprocket wheel 67. In Figure 9, the segments 68 of sprocket wheel 67 are shaded to emphasize the rotational mis-alignment of the keys. The offset angle of the keys in sprocket wheels 24C and 67 is preferably 22.5 degrees when an octagonal shaft surface key is employed. Note that the sprocket wheels 24C and 67 are not identical because the apertures 70, 71 are offset differently relative to the key configurations in the respective wheels.

A coupling yoke member, such as rod 68 (preferably with at least one other, not shown), is coupled between sprocket wheels 24C and 67 at the respective apertures 70, 71 to prevent rotation of sprocket wheel 67 while it is retained in its axially locked in posture, since sprocket wheel 24C is non-rotationally keyed to the shaft (60). The particular sprocket wheel 24C may be held in an axially fixed relationship by the coupling member 68, or alternatively may axially slide along it to float. Any other sprocket wheels are free to float and need not ride on the coupling member 68.

## Claims

1. A modular link conveyor belt sprocket drive system (15, 18) with a modular belt (15) of predetermined width adapted for engaging sprocket drive means (21, 22, 23) distributed in predetermined positions across the belt width, said sprocket drive means being located upon the circumference of a hollow body member (28) and comprising a set of separate, spaced sprocket discs (20) which are located to engage and drive the belt (15) and comprise keying means (60) for mating with the outer surface (25) of the body member (28) for permitting free axial movement and removal from the body member, the outer surface of the body member (28) forming keys for retaining the sprocket drive means (21, 22, 23; 24c, 67) thereon to rotate with the body member (28),
**characterized** in that:
the body member (28) houses an electric drive motor (51) with a mechanism (57) for rotating the hollow body member (28) and sprocket drive means (21, 22, 23) about the drive motor assembly;
the peripheral surface (25) of the body member (28) is smooth and devoid of rough surfaces, crevices and sharp corners that tend to accumulate bacteria, dirt, grease or grime; and further characterized by:
end closing means (48, 49) hermetically sealing the body member (28) to prevent external contaminants from entering the interior of the body member and to prevent internal contaminants inside the body member from entering the environment in which the conveyor belt system (15, 18) is working.

2. Modular drive system of claim 1, **characterized** by tracking means (66), circumferentially indented in the outer surface (25) of the body member (28) and axially positioned thereon at a predetermined station along the shaft and constituting means for controlling axial wander of the sprocket drive means (24c, 67), thereby to retain the belt (15) in a preferred drive path.

3. Modular drive system of claim 2, **characterized** by a coupling yoke (68) for ganging together in fixed axial spacing at least two sprocket drive members (24c, 67) to axially move on the outer surface (25) in unison.

4. Modular drive system of claim 3, **characterized** in that the tracking means indentation (66) in the outer surface (25) of a configuration permits the keying means (60) of one ganged sprocket drive member (24c, 67) to rotate relative to the outer surface (25), and in that the sprocket drive members (24c, 67) are relatively oriented by the coupling means (68), so that the keying means (60) of the at least two sprocket drive members (24c, 67) are misaligned for locking one of the two sprocket drive members (24c, 67) in place in the tracking means indentation (66).

5. Modular drive system of claim 1, **characterized** in that a substantially circumferential outer surface (25) forms keying means integrally on the body member (28) as radially disposed indentations into the outer surface (25).

6. Modular drive system of claim 5, **characterized** in that the hollow body member (28) defines inwardly indented surfaces located at a plurality of radial positions about the body member (28).

7. Modular drive system of claim 6, **characterized** by an even number of planar indented surfaces (30) about the body member (28).

8. Modular drive system of claim 7, **characterized** by eight planar indented surfaces (30).

9. Modular drive system of claim 7, **characterized** in that one of the planar surfaces (30) is configured asymmetrically with the other planar surfaces thereby to produce keying structure for orienting the sprocket drive rings (20) in a particular radial position.

## Patentansprüche

1. Ein modulares Kettenradantriebssystem (15, 18) für einen Gliedbandförderer mit einem modularen Band (15) von vorgegebener Breite, das geeignet ist, um mit Kettenradantriebsmitteln (21, 22, 23), die in vorgegebenen Positionen über die Bandbreite verteilt sind, in Eingriff zu kommen, wobei die Kettenradantriebsmittel am Umfang eines hohlen Körperelements (28) angeordnet sind und einen Satz von getrennten, beabstandeten Zahnscheiben (20) umfassen, die angeordnet sind, um mit dem Band (15) in Eingriff zu kommen und dieses anzutreiben, und Keilmittel (60) umfassen, um an der Außenfläche (25) des Körperelements (28) in Eingriff zu kommen, um eine freie axiale Bewegung und Entfernung von dem Körperelement zu erlauben, wobei die Außenfläche des Körperelements (28) Keile bildet, um die Kettenradantriebsmittel (21, 22, 23; 24C, 67) daran so zu halten, daß sie mit dem Körperelement (28) drehen, dadurch **gekennzeichnet,** daß:
das Körperelement (28) einen elektrischen Antriebsmotor (51) mit einem Mechanismus (57) zum Drehen des hohlen Körperelements (28) und der Kettenradantriebsmittel (21, 22, 23) um die Antriebsmotoranordnung aufnimmt,
die Umfangsfläche (25) des Körperelements (28) glatt und frei von rauhen Flächen, Spalten und scharfen Kanten, die dazu tendieren, Bakterien, Schmutz, Schmiermittel oder Staub zu sammeln, ist; und weiter gekennzeichnet durch:
Endschließmittel (48, 49), die das Körperelement (28) hermetisch verschließen, um zu verhindern, daß äußere Verschmutzungen in den Innenraum des Körpers eintreten und um zu verhindern, daß interne Verschmutzungen innerhalb des Körperelements in die Umgebung eintreten, in der das Förderbandsystem (15, 18) arbeitet.

2. Modulares Antriebssystem nach Anspruch 1, **gekennzeichnet** durch Führungsmittel (66), die in der Außenfläche (25) des Körperelements (28) in Umfangsrichtung vertieft sind und daran axial an einer vorgegebenen Station entlang der Welle positioniert sind und Mittel bilden, um ein axiales Wandern der Kettenradantriebmittel (24C, 67) zu steuern und dadurch das Band (15) in einem bevorzugten Antriebspfad (15) zu halten.

3. Modulares Antriebssystem nach Anspruch 2, **gekennzeichnet** durch ein Kupplungsjoch (68), um in einem festgelegten axialen Abstand wenigstens zwei Kettenradantriebsmittel (24C, 67) im Gleichlauf zu verbinden, damit sie sich an der Außenfläche (25) zusammen bewegen.

4. Modulares Antriebssystem nach Anspruch 3, dadurch **gekennzeichnet,** daß die Führungsmittelvertiefung (66) in der Außenfläche (25) einer Anordnung es den Keilmitteln (60) von einem im Gleichlauf verbundenen Kettenradantriebselement (24C, 67) erlaubt, sich relativ zu der Außenfläche (25) zu drehen, und daß die Kettenradantriebselemente (24C, 67) durch das Kupplungsmittel (68) relativ zueinander ausgerichtet sind, so daß die Keilmittel (60) der wenigstens zwei Kettenradantriebselemente (24C, 67) versetzt sind, um eines der beiden Kettenradantriebselemente (24C, 67) in der Führungsmittelvertiefung (66) an einer Stelle zu verriegeln.

5. Modulares Antriebssystem nach Anspruch 1, dadurch **gekennzeichnet,** daß eine im wesentlichen in Umfangsrichtung verlaufende Außenfläche (25) Keilmittel integral an dem Körperelement (28) als radial in der Außenfläche (25) angeordnete Vertiefungen bildet.

6. Modulares Antriebssystem nach Anspruch 5, dadurch **gekennzeichnet,** daß das hohle Körperelement (28) nach innen vertiefte Flächen definiert, die in einer Mehrzahl von radialen Positionen um das Körperelement (28) herum angeordnet sind.

7. Modulares Antriebssystem nach Anspruch 6, **gekennzeichnet** durch eine gerade Anzahl von planaren vertieften Flächen (30) um das Körperelement (28) herum.

8. Modulares Antriebssystem nach Anspruch 7, **gekennheichnet** durch acht planare vertiefte Flächen (30).

9. Modulares Antriebssystem nach Anspruch 7, dadurch **gekennzeichnet,** daß eine der planaren Flächen (30) asymmetrisch zu den anderen planaren Flächen ausgebildet ist, um eine Keilanordnung zu erzeugen, um die Kettenradantriebsringe (20) in einer besonderen radialen Position auszurichten.

## Revendications

1. Système d'entraînement de roues à chaînes de courroies de transport (15, 18) ayant une courroie modulaire (15) de largeur prédéterminée, adaptée pour s'engager contre des moyens d'entraînement de roues à chaînes (21, 22 23) distribués en des positions prédéterminées sur la largeur de courroie, lesdits moyens d'entraînement de roues à chaînes étant situés sur la circonférence d'un organe formant corps creux (28) et comprenant un jeu de disques de roues à chaînes (20) espacés, séparés, qui sont disposés de manière à s'engager contre et à entraîner la courroie (15) et comprennent un moyen de prise (60) conçu pour s'adapter à la surface extérieure (25) de l'organe formant corps (28), pour permettre un mouvement axial libre et un enlèvement depuis l'organe formant corps, la surface extérieure de l'organe formant corps (28) formant des clavettes pour y maintenir les moyens d'entraînement de roues à chaînes (21, 22, 23; 24c, 67), afin de tourner conjointement avec l'organe formant corps (28),
caractérisé en ce que
l'organe formant corps (28) loge un moteur d'entraînement (51) électrique ayant un mécanisme (57) pour faire tourner l'organe formant corps creux et les moyens d'entraînement de roues à chaînes (21, 22, 23) autour de l'agencement de moteur d'entraînement,
la surface périphérique (25) de l'organe formant corps (28) est lisse et exempte de surfaces rugueuses, de fentes et d'angles tranchants qui ont tendance à accumuler des bactéries, de la saleté, de la graisse ou de las crasse; et caractérisé en outre par :
des moyens de fermeture d'extrémité (48, 49) fermant hermétiquement l'organe formant corps (28), pour empêcher tout contaminant extérieur de'entrer à l'intérieur de l'organe formant corps et empêcher des contaminants internes situes à l'intérieur de l'organe formant corps d'entrer dans l'environnement dans lequel travaille le système de courroie de transport (15, 18).

2. Système d'entraînement modulaire selon la revendication 1, caractérisé par un moyen de poursuite (66), imprimé circonférentiellement dans la surface extérieure (25) de l'organe formant corps (28) et y étant disposé axialement, en un emplacement prédeterminé le long de l'arbre et constituant un moyen pour contrôler la trajectoire axiale des moyens d'entraînement de roues à chaînes (24c, 67), pour maintenir de ce fait la courroie (15) sur un chemin d'entraînement prédéterminé.

3. Système d'entraînement modulaire selon la revendication 2, caractérisé par un étrier de couplage (68) pour coupler mécaniquement ensemble, selon un espacement axial fixe, au moins deux organes d'entraînement de roues à chaînes (24c, 67) pour les faire se déplacer axialement à l'unisson sur la surface extérieure (25).

4. Système d'entraînement modulaire selon la revendication 3, caractérisé en ce que l'empreinte formant moyen de poursuite (66) dans la surface extérieure (25) d'une configuration permet aux moyens de prise (60) d'un organe d'entraînement de roues à chaînes (24c, 67) couplé mécaniquement de tourner par rapport à la surface extérieure (25) et en ce que les organes d'entraînement de roues à chaînes (24c, 67) sont orientés relativement par le moyen de couplage (68), de manière que les moyens de prise (60) des au moins deux organes d'entraînement de roues à chaînes (24c, 67) ne soient par alignes, pour permettre le verrouillage de l'un des deux organes d'entraînement de roues à chaînes (24c, 67) dans l'empreinte de moyen de poursuite (66).

5. Système d'entraînement modulaire selon la revendication 1, caractérisé en ce qu'une surface extérieure (25) sensiblement circonférentielle forme un moyen de prise d'un seul tenant sur l'organe formant corps (28), réalisé sous forme d'empreinte disposée radialement dans la surface extérieure (25).

6. Système d'entraînement modulaire selon la revendication 5, caractérise en ce que l'organe formant corps creux (28) définit des surfaces imprimées vers l'intérieur, situées en une pluralité de positions radiales autour de l'organe formant corps (28).

7. Système d'entraînement modulaire selon la revendication 6, caractérisé par un nombre égal de surface imprimées (30) planaires autour de l'organe formant corps (28).

8. Système d'entraînement modulaire selon la revendication 7, caractérisé par la présence de huit surfaces imprimées planaires (30).

9. Système d'entraînement modulaire selon la revendication 7, caractérisé en ce que l'une des surfaces planaires (30) est configurée de mainière asymétrique par rapport aux autres surfaces planaires, pour produire de ce fait une structure de prise afin d'orienter les bagues d'entraînement de roues à chaînes (20) dans une position radiale particulière.
